# EUROPEAN PATENT APPLICATION

(11) **EP 3 196 080 A1**
(43) Date of publication of application: **26.07.2017**
(21) Application number: 15840286.7
(22) Date of filing: 13.08.2015
(51) Int. Cl.: B60R 22/22

(54) **BUCKLE DEVICE**

(30) Priority: 10.09.2014 JP 2014184535
(71) Applicant: Kabushiki Kaisha Tokai-Rika-Denki-Seisakusho, Niwa-gun, Aichi-ken 480-0195 (JP)
(72) Inventor: TATSUMA, Atsushi, Niwa-gun Aichi 480-0195 (JP); MATSUZAKI, Makoto, Niwa-gun Aichi 480-0195 (JP); ONODERA, Nao, Niwa-gun Aichi 480-0195 (JP); TANAKA, Hiroto, Niwa-gun Aichi 480-0195 (JP); HAYASHI, Koji, Niwa-gun Aichi 480-0195 (JP); SAITO, Takuhiro, Niwa-gun Aichi 480-0195 (JP)
(74) Representative: TBK
(86) International application number: PCT/JP2015/072921
(87) International publication number: WO 2016/039075

(57) **Abstract**

A buckle guide (42) formed in the shape of a cross-sectionally rectangular tube is inserted from a vehicle rear and lower end portion of a buckle cover (56) of a buckle, and guide ribs (58) that project from an inner surface of the buckle cover (56) are in abutting contact with a rectangular guide surface (42A) that is an outer surface of the buckle guide (42). Because of this, swiveling of the buckle cover (56) relative to the buckle guide (42) is limited.

## Description

### Technical Field

The present invention relates to a buckle device in which a buckle can be moved by driving force of a drive component.

### Background Art

There is a buckle device where a drive component such as a motor and a buckle of a seat belt device are coupled to each other by a coupling member such as a wire and where the buckle is moved by driving force of the drive component (for example, see Japanese Patent Application Laid-open (JP-A) No. 2010-208497). In this type of buckle device, there is the potential for the buckle to move in a direction different from the direction in which the buckle is moved by the driving force of the drive component, such as the buckle swiveling in such a way that torsion occurs in the section of the coupling member on the buckle side, and because of this movement it becomes difficult to engage the tongue with the buckle.

### SUMMARY OF INVENTION

### Technical Problem

In consideration of the above circumstances, it is an object of the present invention to obtain a buckle device that can limit movement of the buckle in a direction different from the direction in which the buckle is moved by the driving force of the drive component.

### Solution to Problem

A buckle device of a first aspect of the present invention includes: a buckle with which a tongue of a seat belt device becomes engaged; a coupling member coupled to the buckle; a drive component to which the coupling member is coupled and which moves, by means of driving force, the buckle in a predetermined direction via the coupling member; and a limiting member that limits movement of the buckle in a direction different from the predetermined direction.

In the buckle device of the first aspect of the present invention, movement of the buckle in a direction different from the predetermined direction, which is the direction in which the buckle is moved by the driving force of the drive component, is limited by the limiting member, so a tongue can be easily engaged with the buckle.

A buckle device of a second aspect of the present invention is the buckle device of the second aspect, wherein the limiting member limits swiveling of the buckle in a direction about an axis whose axial direction coincides with the predetermined direction.

In the buckle device of the second aspect of the present invention, swiveling of the buckle in a direction about an axis whose axial direction coincides with the predetermined direction, which is the direction in which the buckle is moved by the driving force of the drive component, is limited by the limiting member, so the tongue can be easily engaged with the buckle.

A buckle device of a third aspect of the present invention is the buckle device of the second aspect, wherein the limiting member is equipped with a guide surface that has a noncircular cross-sectional shape as cut in a direction orthogonal to the predetermined direction, guides the buckle in the predetermined direction as a result of the buckle becoming directly or indirectly engaged therewith, and limits movement of the buckle in a direction different from the predetermined direction.

According to the buckle device of the third aspect of the present invention, the buckle becomes directly or indirectly engaged with the guide surface of the limiting member, and the buckle is guided by the guide surface of the limiting member and is moved in the predetermined direction. Furthermore, the guide surface has a noncircular cross-sectional shape as cut in a direction orthogonal to the predetermined direction, and movement of the buckle in a direction different from the predetermined direction can be limited as a result of the buckle becoming directly or indirectly engaged with the guide surface.

A buckle device of a fourth aspect of the present invention is the buckle device of any of the first to third aspects, wherein the limiting member is equipped with a rigidity augmenting member that is provided between the drive component and the buckle and augments rigidity, between the drive component and the buckle, in a direction about an axis whose axial direction coincides with the predetermined direction.

According to the buckle device of the fourth aspect of the present invention, the limiting member is equipped with the rigidity augmenting member, and the rigidity augmenting member is provided between the drive component and the buckle. Because of this, rigidity in a direction about an axis whose axial direction coincides with the predetermined direction, which is the direction in which the buckle is moved by the driving force of the drive component, is augmented between the drive component and the buckle. For this reason, swiveling of the buckle in a direction about an axis whose axial direction coincides with the predetermined direction can be limited, and the tongue can be easily engaged with the buckle.

A buckle device of a fifth aspect of the present invention is the buckle device of the fourth aspect, wherein the rigidity augmenting member includes: a tubular member whose lengthwise direction base end portion is coupled to the drive component and whose lengthwise direction distal end portion is coupled to the buckle, and which is moved by the driving force of the drive component and is deformable between the lengthwise direction base end portion and the lengthwise direction distal end portion; and plural pieces that are provided inside the tubular member and adjacent to each other in the lengthwise direction of the tubular member and contribute, to the tubular member, rigidity in a direction about an axis whose axial direction coincides with the lengthwise direction of the tubular member.

According to the buckle device of the fifth aspect of the present invention, the plural pieces are provided on the inside of the tubular member of the rigidity augmenting member and adjacent to each other in the lengthwise direction of the tubular member. Because of this, rigidity in a direction about an axis whose axial direction coincides with the lengthwise direction of the tubular member is contributed to the tubular member, and on the buckle side, rigidity in a direction about an axis whose axial direction coincides with the predetermined direction, which is the direction in which the buckle is moved by the driving force of the drive component, becomes higher.

A buckle device of a sixth aspect of the present invention is the buckle device of the fifth aspect, wherein the rigidity of the tubular member is set lower than that of the coupling member, and at curved sections of both the tubular member and the coupling member between the drive component and the buckle, the tubular member is provided on the inner side of the coupling member in the direction of the radius of curvature of the curve.

According to the buckle device of the sixth aspect of the present invention, at the curved sections of both the tubular member and the coupling member between the drive component and the buckle, the tubular member whose rigidity is lower than that of the coupling member is provided on the inner side of the coupling member in the direction of the radius of curvature of the curve. For this reason, resistance when the coupling member becomes curved can be reduced compared to a configuration where the coupling member is provided on the inner side of the tubular member in the direction of the radius of curvature of the curve.

### Advantageous Effects of Invention

As described above, the buckle device pertaining to the present invention can limit movement of the buckle in a direction different from the direction in which the buckle is moved by the driving force of the drive component.

### BRIEF DESCRIPTION OF DRAWINGS

FIG. 1 is a front sectional view of a buckle device pertaining to a first embodiment.
FIG. 2 is a front view, corresponding to FIG. 1, showing a state in which a buckle has been moved by driving force of a drive component.
FIG. 3 is a sectional view along line 3-3 of FIG. 1.
FIG. 4 is a sectional view along line 4-4 of FIG. 1.
FIG. 5 is a front sectional view of a buckle device pertaining to a second embodiment.

### DESCRIPTION OF EMBODIMENTS

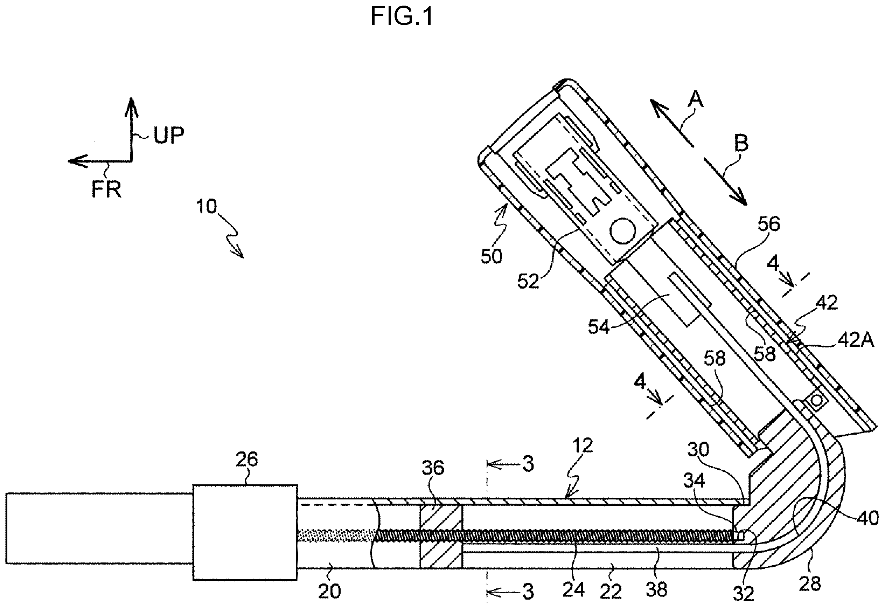

Next, embodiments of the present invention will be described on the basis of FIG. 1 to FIG. 5. It should be noted that, in the drawings, arrow FR indicates a forward direction of a vehicle to which buckle devices 10 and 70 have been applied, arrow IN indicates an inward direction in the vehicle width direction, and arrow UP indicates a vehicle upward direction.

### <First Embodiment>

As shown in FIG. 1, a buckle device 10 pertaining to a first embodiment is equipped with a frame 12. The frame 12 is provided on the vehicle width direction inner side of a seat (not shown in the drawings) of the vehicle and is secured to the vehicle body, such as a floor of the vehicle or a skeletal member of the seat, by fastening members such as bolts. The frame 12 is equipped with a pair of guide walls 20 and 22 that oppose each other in the vehicle width direction, and a drive screw 24 is provided between the guide walls 20 and 22.

The axial direction of the drive screw 24 lies along the vehicle forward and rearward direction. The vehicle front end portion of the drive screw 24 is coupled to a motor actuator 26 serving as a drive component provided on the vehicle front side of the frame 12, and the drive screw 24 is rotated by driving force of the motor actuator 26. The motor actuator 26 is electrically connected to a control unit (not shown in the drawings) such as a motor driver or an ECU. The control unit is electrically connected to an occupant detection component, such as a load sensor provided in a seat cushion of the seat, and a buckle switch, which is provided in a later-described buckle 50 and detects that a tongue is engaged with the buckle 50 (neither the occupant detection component nor the buckle switch is shown in the drawings), and the motor actuator 26 is controlled on the basis of electrical signals output from the occupant detection component and the buckle switch.

Furthermore, a wire guide 28 is provided on the vehicle rear side of the frame 12. The wire guide 28 is equipped with an insertion portion 30. The insertion portion 30 is formed in the shape of a block whose dimension in the vehicle width direction is substantially equal to the distance between the guide walls 20 and 22, and the insertion portion 30 is inserted between the guide walls 20 and 22 from the vehicle rear end portion of the frame 12. Because of this, the wire guide 28 is coupled to the frame 12. Moreover, a bearing hole 32 that opens in the vehicle forward direction is formed in the insertion portion 30 of the wire guide 28. A shaft portion 34 that projects coaxially with the drive screw 24 from the vehicle rear end portion of the drive screw 24 is inserted into the bearing hole 32, and the shaft portion 34 is rotatably supported.

A slider 36 is provided between the guide walls 20 and 22. The slider 36 is formed in the shape of a block, and the surfaces on the vehicle width direction sides of the slider 36 are in abutting contact with the guide walls 20 and 22. Furthermore, a screw hole through which the drive screw 24 is passed is formed in the slider 36, and the slider 36 is guided by the guide walls 20 and 22 and slid in the vehicle forward and rearward direction as a result of the drive screw 24 rotating.

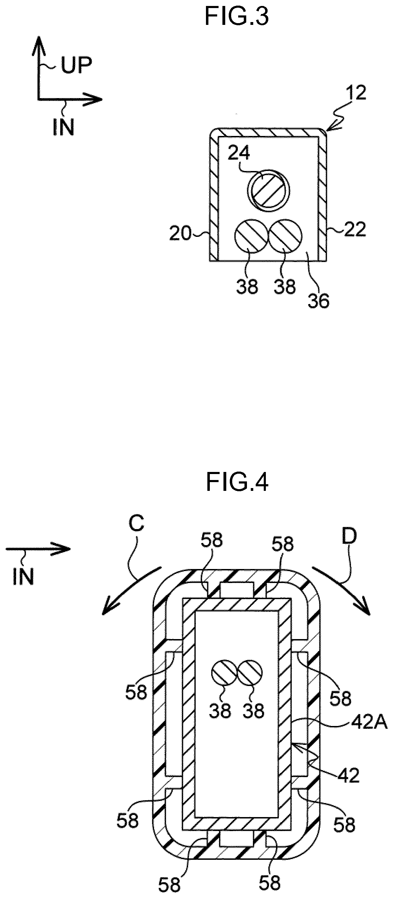

Furthermore, as shown in FIG. 1 and FIG. 3, the buckle device 10 is equipped with a pair of wire ropes 38 serving as coupling members. The wire ropes 38 are formed long and, as shown in FIG. 3, are provided adjacent to each other in the vehicle width direction. As shown in FIG. 1, in the sections of the wire ropes 38 on the base end sides of their lengthwise direction middle portions, the lengthwise direction of the wire ropes 38 lies along the vehicle forward and rearward direction, and the lengthwise direction base end portions of the wire ropes 38 are coupled to the slider 36 on the vehicle lower side of the drive screw 24. For this reason, when the slider 36 slides in the vehicle forward and rearward direction, the wire ropes 38 are moved in their lengthwise direction.

A wire guide groove 40 is formed in the wire guide 28. The wire guide groove 40 is open at the vehicle width direction outer surface of the wire guide 28 and is closed off by a plate-like cover member (not shown in the drawings) provided on the vehicle width direction outer side of the wire guide 28. Furthermore, one lengthwise direction end of the wire guide groove 40 is open at the vehicle front end surface of the insertion portion 30 of the wire guide 28. Moreover, the wire guide groove 40 is curved at its lengthwise direction middle portion in a direction about an axis whose axial direction coincides with the vehicle width direction, and the lengthwise direction other end of the wire guide groove 40 is open at the vehicle upper surface of the wire guide 28. The wire ropes 38 are passed through the wire guide groove 40, and the sections of the wire ropes 38 on the distal end sides of their lengthwise direction middle portions extend in a vehicle forward and upward direction (the direction of arrow A in FIG. 1) from the lengthwise direction other end of the wire guide groove 40.

Furthermore, a buckle guide 42 serving as a limiting member is provided on the vehicle upper side of the wire guide 28. The lengthwise direction of the buckle guide 42 is a direction (the direction of arrow A and its opposite-the direction of arrow B-in FIG. 1) that slopes in the vehicle vertical direction relative to the vehicle forward and rearward direction. The vehicle rear and lower end portion of the buckle guide 42 is secured to the wire guide 28 directly or indirectly via another member; because of this, the buckle guide 42 is secured to the vehicle body via the wire guide 28 and the frame 12. As shown in FIG. 4, the cross-sectional shape of the buckle guide 42 as cut in a direction orthogonal to the lengthwise direction of the buckle guide 42 is a tubular shape whose outer surface and inner surface are rectangular, and the outer surface of the buckle guide 42 is a guide surface 42A. The wire ropes 38 extend inside the buckle guide 42 from the lengthwise direction other end of the wire guide groove 40 of the wire guide 28.

Furthermore, the buckle device 10 is equipped with a buckle 50. The buckle 50 is equipped with a buckle body 52. The buckle body 52 is formed in the shape of a "U" in which vertical walls extend inward in the vehicle width direction from both width direction end portions of a bottom plate whose lengthwise direction is substantially the same direction as the lengthwise direction of the buckle guide 42, and a latch is provided inside the buckle body 52. When a tongue (not shown in the drawings) of a seat belt device is inserted between both vertical walls of the buckle body 52 from the vehicle front and upper side of the buckle body 52, the latch enters a hole portion formed in the tongue; because of this, the tongue becomes engaged with the buckle 50.

A wire securing member 54 extends in a vehicle rearward and downward direction (the direction of arrow B in FIG. 1) from the vehicle rear and lower end portion of the buckle body 52, and the lengthwise direction distal end portions of the wire ropes 38 are secured to the wire securing member 54. For this reason, when the wire ropes 38 are moved in the direction of their lengthwise direction distal ends, the buckle body 52 is moved in a vehicle forward and upward direction (the direction of arrow A in FIG. 1), and when the wire ropes 38 are moved in the direction of their lengthwise direction base ends, the buckle body 52 is moved in a vehicle rearward and downward direction (the direction of arrow B in FIG. 1).

Furthermore, the buckle 50 is equipped with a buckle cover 56. The lengthwise direction of the buckle cover 56 lies along the lengthwise direction of the buckle guide 42, and, as shown in FIG. 4, the cross-sectional shape of the buckle cover 56 as cut in a direction orthogonal to the lengthwise direction of the buckle cover 56 is a tubular shape whose outer surface and inner surface are rectangular. The buckle body 52 is disposed inside the buckle cover 56 on the vehicle front and upper side of the lengthwise direction middle portion of the buckle cover 56, and the buckle cover 56 is integrally coupled to the buckle body 52.

The buckle guide 42 is inserted from the vehicle rear and lower end portion of the buckle cover 56. Moreover, plural guide ribs 58 are provided in the buckle cover 56. As shown in FIG. 4, the guide ribs 58 project inside the buckle cover 56 from each of the four surfaces on the inside of the cross-sectionally rectangular buckle cover 56, and the distal ends of the guide ribs 58 are in abutting contact with the guide surface (outer surface) 42A of the buckle guide 42. Because of this, the buckle cover 56 is guided by the buckle guide 42 and can slide in the lengthwise direction of the buckle guide 42 (that is, the direction of arrow A and the direction of arrow B in FIG. 1).

### <Operation and Effects of First Embodiment>

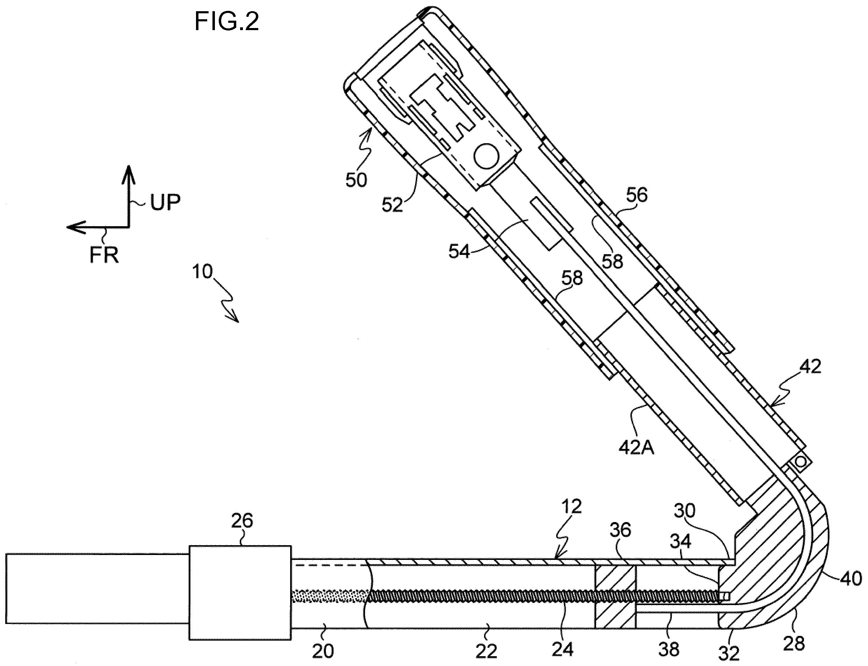

In the buckle device 10, when an occupant sits in the seat, the level of the electrical signal output from the occupant detection component, such as a load sensor provided in the seat cushion of the seat, to the control unit changes. When, because of this, the motor actuator 26 is driven and when the drive screw 24 is rotated, the slider 36 is guided by the guide walls 20 and 22 of the frame 12 and is slid in the vehicle rearward direction. When, because of this, the wire ropes 38 are moved in the direction of their lengthwise direction distal ends, the buckle body 52 is pushed by the wire ropes 38. Because of this, as shown in FIG. 2, the buckle cover 56 integrated with the buckle body 52 is guided by the buckle guide 42 and is slid in a vehicle forward and upward direction. In this way, the buckle 50 is raised upward, so the occupant can easily engage the tongue with the buckle 50 and can easily wear the webbing.

When the tongue becomes engaged with the buckle 50, the level of the electrical signal output from the buckle switch of the buckle 50 to the control unit changes. When, because of this, the motor actuator 26 is driven and the drive screw 24 is rotated, the slider 36 is guided by the guide walls 20 and 22 of the frame 12 and is slid in the vehicle forward direction. When, because of this, the wire ropes 38 are moved in the direction of their lengthwise direction base ends, the buckle cover 56 is pulled via the buckle body 52 by the wire ropes 38. Because of this, the buckle 50 is slid in a vehicle rearward and downward direction.

Here, the cross-sectional shape of the buckle guide 42 is rectangular (that is, noncircular), and the guide ribs 58 that project from the inner surface of the buckle cover 56 are in abutting contact with the rectangular guide surface (outer surface) 42A of the buckle guide 42. Moreover, the buckle guide 42 is secured to the vehicle body via the wire guide 28 and the frame 12.

For this reason, swiveling (movement in the direction of arrow C or the direction of arrow D in FIG. 4) of the buckle cover 56 relative to the buckle guide 42 in a direction about an axis whose axial direction coincides with the lengthwise direction of the buckle guide 42 (the direction of arrow A and the direction of arrow B in FIG. 1) is limited. Moreover, movement of the buckle cover 56 relative to the buckle guide 42 in the vehicle forward and rearward direction and in the vehicle width direction is limited as a result of the guide ribs 58 being in abutting contact with the rectangular guide surface (outer surface) 42A of the buckle guide 42. Because of this, in the raised state of the buckle 50 the occupant can easily engage the tongue with the buckle 50.

### <Second Embodiment>

Next, a second embodiment will be described. It should be noted that, in describing this embodiment, identical reference signs will be assigned to parts that are basically identical to those in the first embodiment and detailed description of those parts will be omitted.

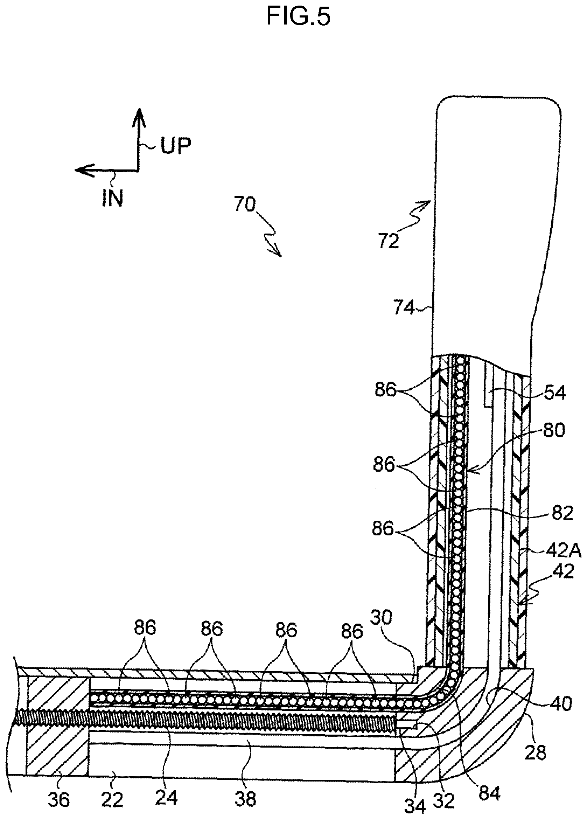

As shown in FIG. 5, in a buckle device 70 pertaining to the second embodiment, the pair of guide walls 20 and 22 of the frame 12 oppose each other in the vehicle forward and rearward direction, the motor actuator 26 (not shown in FIG. 5) is provided on the vehicle width direction cabin side of the frame 12, and the axial direction of the drive screw 24 provided between the guide walls 20 and 22 lies along the vehicle width direction. For this reason, when the drive screw 24 is rotated by the driving force of the motor actuator 26, the slider 36 provided between the guide walls 20 and 22 is slid in the vehicle width direction.

Furthermore, the lengthwise direction of the wires ropes 38, whose lengthwise direction base end portions are coupled to the slider 36, lies along the vehicle width direction in the sections of the wire ropes 38 on the base end sides of their lengthwise direction middle portions. Moreover, the wire guide groove 40 of the wire guide 28 provided on the side of the frame 12 opposite the motor actuator 26 side is curved in a direction about an axis whose axial direction coincides with the vehicle forward and rearward direction, and the sections of the wire ropes 38 on their lengthwise direction distal end sides relative to the wire guide groove 40 extend in the vehicle upward direction.

Moreover, the buckle device 70 is equipped with a buckle 72 instead of the buckle 50. The buckle 72 basically has the same configuration as the buckle 50 in the first embodiment, but the buckle 72 is equipped with a buckle cover 74 instead of the buckle cover 56. The guide ribs 58 are not formed in the buckle cover 74; rather, the inner surface of the buckle cover 74 is in abutting contact with the guide surface (outer surface) 42A of the buckle guide 42. Because of this, the buckle cover 74 is guided by the buckle guide 42 and can move.

Furthermore, the buckle device 70 is equipped with a rigidity augmenting member 80 that configures a limiting member together with the buckle guide 42. The rigidity augmenting member 80 is equipped with a tube 82 serving as a tubular member. The tube 82 is formed in the shape of a long tube and is made of a synthetic resin material whose rigidity is lower than that of the wire ropes 38, and the cross-sectional shape of the tube 82 as cut in a direction orthogonal to the lengthwise direction of the tube 82 is a rectangular shape whose lengthwise direction lies along the vehicle forward and rearward direction. The lengthwise direction base end portion of the tube 82 is coupled to the slider 36 on the vehicle upper side of the drive screw 24.

A tube guide groove 84 is formed in the wire guide 28 in correspondence to the tube 82. The tube guide groove 84 is open at the vehicle front surface of the wire guide 28 and is closed off together with the wire guide groove 40 by a plate-like cover member (not shown in the drawings) provided on the vehicle front side of the wire guide 28. Furthermore, one lengthwise direction end of the tube guide groove 84 is open at the vehicle front end surface of the insertion portion 30 of the wire guide 28. Moreover, the tube guide groove 84 is curved, in a direction about an axis whose axial direction coincides with the vehicle forward and rearward direction, on the inner side of the wire guide groove 40 in the direction of the radius of curvature of the curve, and the other lengthwise direction end of the tube guide groove 84 is open at the vehicle upper surface of the wire guide 28.

The tube 82 is passed through the tube guide groove 84, the section of the tube 82 on the distal end side of its lengthwise direction middle portion extends in the vehicle upward direction from the other lengthwise direction end of the tube guide groove 84, and the lengthwise direction distal end portion of the tube 82 is coupled to the buckle body 52 of the buckle 50 (not shown in FIG. 5). For this reason, when the buckle cover 74 is guided by the buckle guide 42 and is moved, the tube 82 is moved together with the buckle 50.

Plural pieces 86 are provided inside the tube 82. The pieces 86 each have a solid cylinder shape or a hollow cylinder shape (in the present embodiment, a solid cylinder shape) whose axial direction lies along the vehicle forward and rearward direction, and the pieces 86 are provided adjacent to each other in the lengthwise direction of the tube 82 between both lengthwise direction ends of the tube 82. Because of this, the rigidity of the tube 82 in the vehicle forward and rearward direction and in a direction about an axis whose axial direction coincides with the lengthwise direction of the tube 82 is higher compared to the rigidity of the tube 82 in the vehicle width direction.

For this reason, in the buckle device 70, swiveling of the buckle cover 74 relative to the buckle guide 42 in a direction about an axis whose axial direction coincides with the lengthwise direction of the buckle guide 42 and movement of the buckle cover 74 relative to the buckle guide 42 in the vehicle forward and rearward direction are even more effectively limited. Because of this, the occupant can easily engage the tongue with the buckle 50.

Moreover, in the present embodiment, because swiveling of the buckle cover 56 can be limited by the rigidity augmenting member 80, swiveling of the buckle cover 56 can be limited even when the rigidities of the buckle cover 74 and the buckle guide 42 are set low. Here, the pieces 86 of the rigidity augmenting member 80 each have a solid cylinder shape or a hollow cylinder shape whose axial direction lies along the vehicle forward and rearward direction, so the rigidity, in the vehicle width direction, of the tube 82 at its lengthwise direction distal end side does not become higher compared to the rigidity of the tube 82 in the vehicle forward and rearward direction and in a direction about an axis whose axial direction coincides with the lengthwise direction of the tube 82. Consequently, by setting low the rigidities of the buckler cover 74 and the buckle guide 42, the buckle cover 74 can move in the vehicle width direction. Because of this, in a state in which the webbing is being worn on the body of the occupant, the buckle cover 74 is moved outward in the vehicle width direction, that is, toward the body of the occupant, by the tension in the webbing, and, as a result, the webbing can be better fitted to the body of the occupant.

Furthermore, in the present embodiment, the tube guide groove 84 formed in the wire guide 28 is curved, in a direction about an axis whose axial direction coincides with the vehicle forward and rearward direction, on the inner side of the wire guide groove 40 in the direction of the radius of curvature of the curve. For this reason, inside the wire guide 28 the tube 82 is disposed on the inner side of the wire ropes 38 in the direction of the radius of curvature of the curve. Here, the rigidity of the tube 82 is lower than the rigidity of the wire ropes 38. For this reason, compared to a configuration where the tube 82 is disposed on the outer side of the wire ropes 38 in the direction of the radius of curvature of the curve, resistance to deformation (curvature) of the wire ropes 38 can be reduced, and the wire ropes 38 can be smoothly moved.

In the present embodiment, the rigidity augmenting member 80 is configured by the tube 82 and the plural pieces 86. However, the rigidity augmenting member 80 may also be configured by a flat metal plate whose lengthwise direction base end portion is coupled to the slider 36 and whose lengthwise direction distal end portion is coupled to the buckle body 52 and whose width direction lies along the vehicle forward and rearward direction and which is deformable in a direction about an axis whose axial direction coincides with the width direction; the rigidity augmenting member is not particularly limited to the above configuration and can be widely applied.

Furthermore, in the present embodiment, the tube 82 is disposed on the inner side of the wire ropes 38 in the direction of the radius of curvature of the curve, but the tube 82 may also be disposed on the outer side of the wire ropes 38 in the direction of the radius of curvature of the curve or may also be disposed adjacent to the wire ropes 38 in the axial direction of the curvature of the curve. That is, the position where the tube 82 is disposed relative to the wire ropes 38 is not particularly limited and can be widely applied.

Moreover, in the present embodiment, swiveling of the buckle cover 74 is limited by both the buckle guide 42 and the rigidity augmenting member 80, but swiveling of the buckle may also be limited by just the rigidity augmentation resulting from the rigidity augmenting member 80.

Furthermore, in each of the embodiments, the cross-sectional shape of the buckle guide 42 is a rectangular shape and the outer surface of the buckle guide 42 serves as the guide surface 42A. However, the configuration of the guide surface of the limiting member is not limited to this configuration. For example, it suffices for the shape of the guide surface to be noncircular, such as a polygonal shape like a hexagon or pyramid or an elliptical shape; furthermore, the inner peripheral shape of the limiting member formed in a tubular shape may also be made noncircular, with the vehicle lower section of the buckle cover being inserted inside the limiting member to limit swiveling of the buckle cover.

Moreover, in each of the embodiments, swiveling of the buckle covers 56 and 74 is directly limited by the buckle guide 42. However, a slide member guided by the buckle guide 42 may also be provided separately from the buckle covers 56 and 74, with the buckle covers 56 and 74 or the buckle body 52 being secured to the slide member.

Furthermore, in each of the embodiments, there are two of the wire ropes 38 serving as coupling members, but the number of the wire ropes 38 may also be one or three or more. Furthermore, in each of the embodiments, the two wire ropes 38 are provided adjacent to each other in the vehicle width direction or in the vehicle forward and rearward direction on the vehicle lower side of the drive screw 24. However, for example, the two wire ropes 38 may also be provided adjacent to each other in the vehicle vertical direction, or the two wire ropes 38 may also be provided so as to sandwich the drive screw 24 in the slider 36.

The disclosure of Japanese Patent Application No. 2014-184535 filed on September 10, 2014 is incorporated in its entirety by reference herein.

## Claims

1. A buckle device comprising:
a buckle with which a tongue of a seat belt device becomes engaged;
a coupling member coupled to the buckle;
a drive component to which the coupling member is coupled and which moves, by means of driving force, the buckle in a predetermined direction via the coupling member; and
a limiting member that limits movement of the buckle in a direction different from the predetermined direction.

2. The buckle device according to claim 1, wherein the limiting member limits swiveling of the buckle in a direction about an axis whose axial direction coincides with the predetermined direction.

3. The buckle device according to claim 1 or 2, wherein the limiting member is equipped with a guide surface that has a noncircular cross-sectional shape as cut in a direction orthogonal to the predetermined direction, guides the buckle in the predetermined direction as a result of the buckle becoming directly or indirectly engaged therewith, and limits movement of the buckle in a direction different from the predetermined direction.

4. The buckle device according to any one of claim 1 to claim 3, wherein the limiting member includes a rigidity augmenting member that is provided between the drive component and the buckle and augments rigidity, between the drive component and the buckle, in a direction about an axis whose axial direction coincides with the predetermined direction.

5. The buckle device according to claim 4, wherein the rigidity augmenting member includes:
a tubular member whose lengthwise direction base end portion is coupled to the drive component and whose lengthwise direction distal end portion is coupled to the buckle, and which is moved by the driving force of the drive component and is deformable between the lengthwise direction base end portion and the lengthwise direction distal end portion; and
plural pieces that are provided inside the tubular member and adjacent to each other in the lengthwise direction of the tubular member and contribute, to the tubular member, a rigidity in a direction about an axis whose axial direction coincides with the lengthwise direction of the tubular member.

6. The buckle device according to claim 5, wherein a rigidity of the tubular member is set lower than a rigidity of the coupling member, and at curved sections of both the tubular member and the coupling member between the drive component and the buckle, the tubular member is provided on the inner side of the coupling member in the direction of the radius of curvature of the curve.
